# EUROPEAN PATENT SPECIFICATION

(11) **EP 3 617 046 B1**
(45) Date of publication and mention of the grant of the patent: **29.06.2022**
(21) Application number: 19193669.9
(22) Date of filing: 27.08.2019
(51) Int. Cl.: B62D 55/30, B62D 55/04, B62D 55/02, B62D 55/116

(54) **ARRANGEMENT FOR WORKING MACHINE STABILIZATION AND A WORKING MACHINE**
ANORDNUNG ZUR ARBEITSMASCHINENSTABILISIERUNG UND ARBEITSMASCHINE
AGENCEMENT DE STABILISATION DE MACHINE DE TRAVAIL ET MACHINE DE TRAVAIL

(30) Priority: 28.08.2018 FI 20185703
(43) Date of publication of application: 04.03.2020
(73) Proprietor: Nisula Forest Oy, 35600 Halli (FI)
(72) Inventor: Nisula, Esa, 35600 Halli (FI)
(74) Representative: Kolster Oy Ab

(56) References cited:
- WO-A1-91/08941
- WO-A1-93/25429
- FI-B- 126 500
- JP-A- H09 272 472

## Description

### Background of the invention

The invention relates to moving work machines, for example forest work machines such as harvesters and forwarders. Forest machines are used to fell and prune trees, to cut a felled treetrunk into pieces of a specific length, and to load and transport timber acquired in the aforementioned method.

Difficult conditions, such as ground with a bad load-bearing capacity or knolls, slopes, or other ascending or descending forms in the terrain are problematic for the ability of the work machine to move and for its stability. In addition, a heavy work device extending outside the work machine, such as a harvester head with a boom, or a handling grapple with a boom, weaken the stability of the work machine.

Prior art structures for stabilizing a work machine include additional weights at the front part of a work machine and the use of hydraulic support legs, but additional weights add to the mass to be transported, and support legs cannot be used while a work machine is moving. It is furthermore previously known that the use of a bogie structure improves stability but it is expensive as a structure.

From publication FI-8939, an arrangement is known in which an accessory wheel is axled at an end of a support arm pivoted to the frame of a work machine, but this arrangement, due to the rigid connection between the support arm and accessory wheel, is such that it does not allow the work machine to be used with tracks, because a change in the distance between the axle line of the actual wheel of the work machine and the axle line of the accessory wheel in an up-and-down movement of the support arm, as a result of the terrain changing, would cause problems with the tension of the track. It may furthermore be noted that the arrangement according to publication FI-8939 is not even meant to be used with a track, because the auxiliary wheel is not on the line of rotation of the actual wheel of the work machine, but the accessory wheel is at a centre area of the rear part of the work machine, and fixed to pull arms in an area between the actual pair of wheels at the rear part of the work machine. Document FI-126500 discloses the preamble of the independent claims and relates to one prior known technological solution.

### Brief description of the invention

An object of the invention is thus to provide an arrangement and work machine that allow the aforementioned problems to be solved. The object of the invention is achieved by an arrangement and work machine that are characterised by what is stated in the independent claims. Preferred embodiments of the invention are disclosed in the dependent claims.

The invention is based on the support of a hub of the accessory wheel to a support arm being such that it allows the movement of the wheel hub of the auxiliary wheel, and consequently also the auxiliary wheel, along the support arm.

The benefits of the arrangement and work machine according to the invention include an improved load-bearing capacity and stability in such a manner that also the use of tracks becomes possible. By means of the arrangement, the location of the auxiliary wheel adapts to cooperate with the track and terrain, and enables automatic tension adjustment of the track, that is, caterpillar track and chain track.

### Brief description of the drawings

The invention will now be described in more detail in connection with preferred embodiments and with reference to the accompanying drawings, in which:
Figure 1 shown a work machine equipped with tracks, in other words, chain tracks/caterpillar tracks
Figure 2 shows a work machine without tracks,
Figure 3 shows a stabilizing arrangement in connection with a rear part of the frame of a work machine, in a situation where a slide support of a hub of an auxiliary wheel is in its inner position in relation to its support arm,
Figure 4 shows a stabilizing arrangement in connection with a rear part of the frame of a work machine, in a situation where a slide support of a hub of an auxiliary wheel is in its outer position in relation to its support arm,
Figure 5 is an exploded view of a stabilizing system,
Figure 6 shows the hub of the auxiliary wheel with its slide support structure.

### Detailed description of the invention

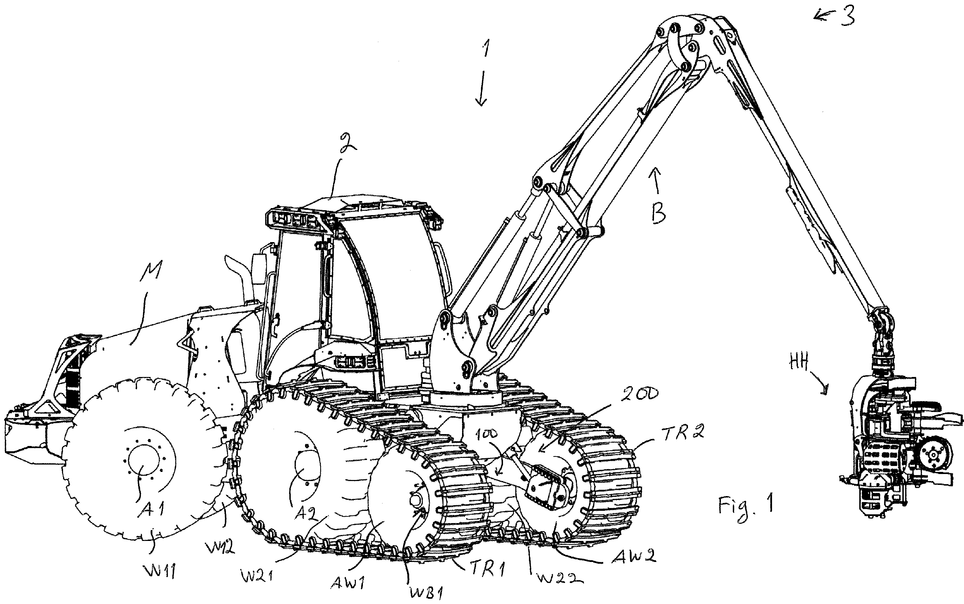

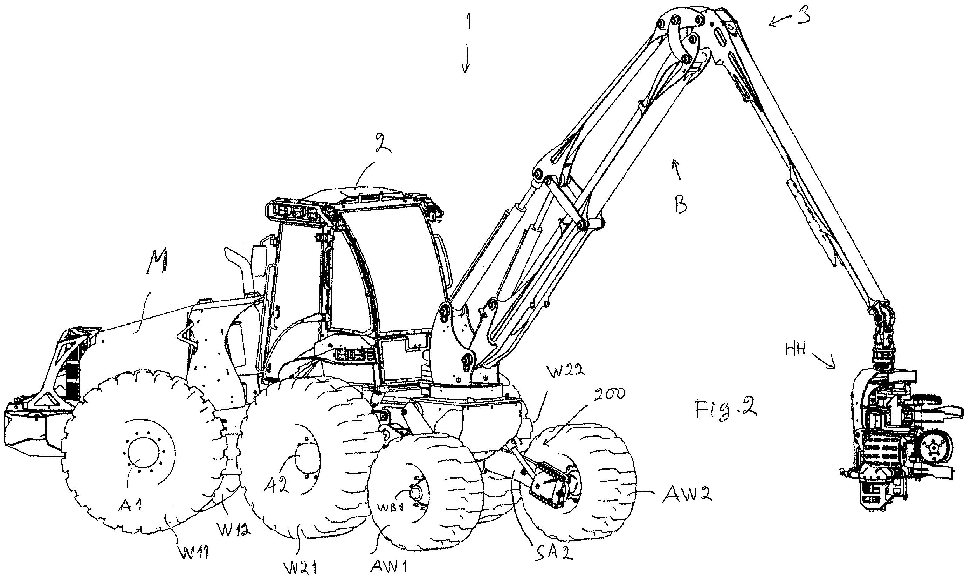

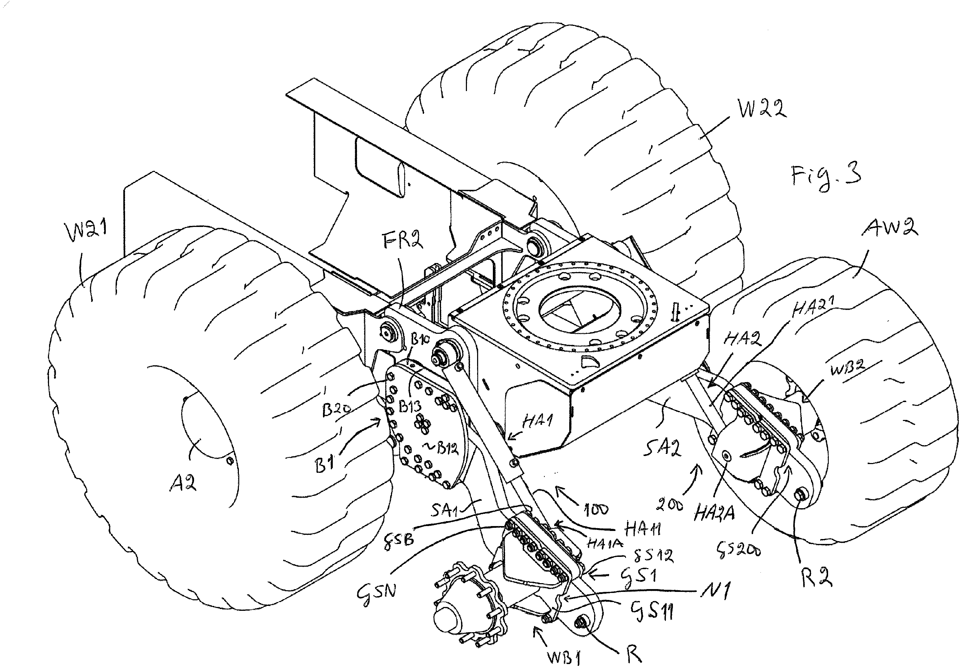

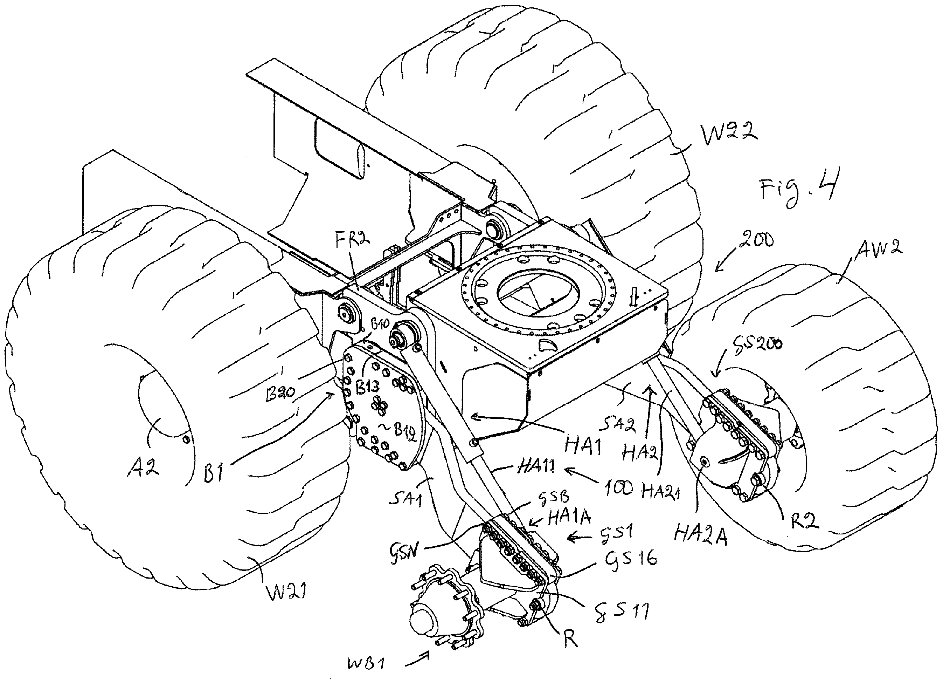

Referring to Figures 1 and 2, in particular, the invention is applied in connection with a work machine 1 such as a forest work machine 1. The work machine 1 comprises actual wheels W11, W12, and W21, W22 with their axles A1, A2. Both fixed axles A1, A2 naturally have two actual wheels. In addition, the work machine comprises a motor M, such as a diesel motor, supported by the front part of its 2-part frame, and supported by the rear part FR2 of its frame, a cabin 2 and work device 3 such as a handling head HH provided with a boom B. The work machine 1 is frame-steered, in other words, the front part and rear part of the 2-part frame may be turned in relation to each other. In Figure 1, the work machine additionally comprises tracks TR1, TR2, that is, chain tracks/caterpillar track. The auxiliary wheels AW1, AW2, improving stability, shown in the other drawings 3 to 5 may also be seen in Figures 1 to 2, and as concerns Figure 1 it may be seen that the track TR1 goes around the actual wheel W21, supported by the rear axle A2, and the first auxiliary wheel AW1, and that the track TR2 goes around the second actual wheel W22, supported by the rear axle A2, and the second auxiliary wheel AW2. Figures 3 to 4, in particular, show that the rear axle A2 and the actual wheels W21, W22 are supported by the rear part FR2 of the frame.

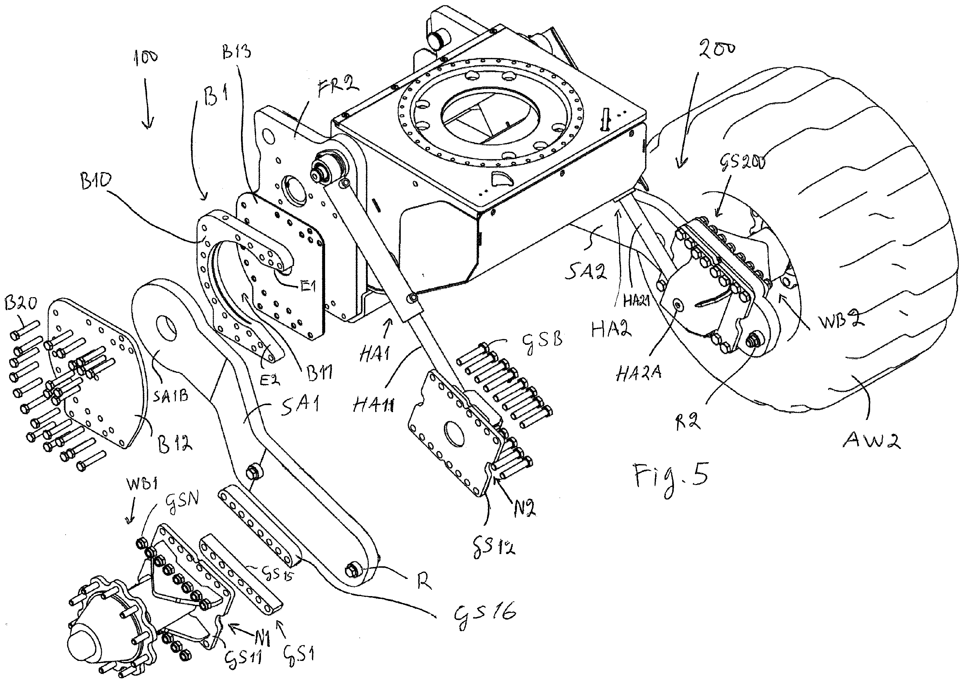

As relates to Figures 1 to 6, there are portions 100, 200 of the stabilizing arrangement on both sides of the work machine 1. Below, the focus will be on discussing the stabilizing system 100 which in the drawing is the stabilizing arrangement closest to the viewer and which, for reasons of clarity, is shown in Figures 3 to 4 without its auxiliary wheel (AW1) and which stabilizing arrangement is shown as an exploded view in Figure 5.

The issue thus is a stabilizing system 100 for stabilizing a work machine 1, such as a forest work machine or other work machine, comprising actual wheels W21, W22 provided with an axle. The arrangement comprises a bearing structure B1 and a support arm SA1 adapted to the frame FR2 of the work machine to rotate vertically by means of the bearing structure in question. The arrangement further comprises, on the outer side end of the support arm SA1, a wheel hub WB1, supported by the support arm SA1, for the auxiliary wheel AW1, and the auxiliary wheel AW1. The arrangement further comprises a hydraulic actuator HA1 to change the position of the wheel hub WB1 and consequently also that of the auxiliary wheel AW1.

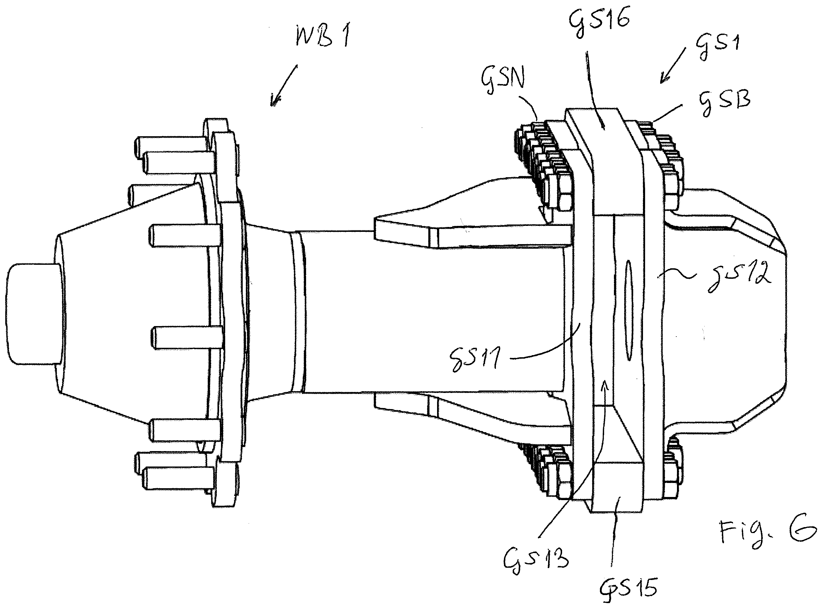

In the stabilizing arrangement 100, the wheel hub WB1 of the auxiliary wheel is supported by the support arm SA1 by means of a slide support structure GS1 provided in connection with the wheel hub WB1, to allow the auxiliary wheel AW1 to move in the direction of the support arm SA1 and supported by the support arm SA1. In an embodiment, the slide support structure GS1 of the wheel hub of the auxiliary wheel comprises vertical plate parts GS11, GS12 facing each other and detachably fastened to each other by means of fastening means GSB, GSN. The plate parts GS11, GS12 of the slide support structure delimit a space GS13 for the support arm, as best illustrated in Figure 6. In addition to the plate parts GS11, GS 12 and fastening means GSB, GSN the slide support structure GS1 may comprise support parts GS15, GS16, such as the slide parts of Figure 5.

A motion arm HA11 of the hydraulic actuator, such as a hydraulic cylinder HA1, is connected through a rotating fastening HA1A to act on the movement of the slide support structure GS1 of the wheel hub WB1 of the auxiliary wheel AW1. The rotating fastening HA1A of the motion arm HA11 of the hydraulic cylinder HA1 to the slide support structure GS1 is, as best seen in Figures 3 to 5, the rotating fastening HA2A of a motion arm HA21 of a second hydraulic cylinder HA2 to a second slide support structure GS200 supported by a second support arm SA2 of the work machine.

When the stabilizing arrangement 100 is in a work machine that has a track TR1 going around an actual wheel, such as W21, and the auxiliary wheel AW1, the hydraulic actuator A1 is connected to move the auxiliary wheel AW1, as enabled by the slide support structure GS1 of the auxiliary wheel and supported by the support arm SA1 in order to maintain the tension of the track TR1.

As the work machine is moving, the hydraulic actuator HA1 has a pressure setting due to which the hydraulic actuator HA1, by its motion arm HA11, that is, by its piston, pushes the auxiliary wheel AW1, enabled by the slide support GS1 of the wheel hub WB1, outward supported by the support arm SA1, if the terrain profile causes the support arm SA1 to rotate.

Correspondingly, the pressure setting of the hydraulic actuator HA1 allows the motion arm HA11 to retreat, as enabled by the slide support GS1 of the wheel hub WB1 of the auxiliary wheel AW1, inward supported by the support arm SA1, if the terrain profile causes the support arm SA1 to rotate.

The fact is that by means of the pressure setting of the hydraulic actuator HA1, the location of the auxiliary wheel AW1 adapts to cooperate with the terrain, making possible an automatic tension adjustment of the track, or caterpillar track/chain track, when a track is used. In an embodiment without the caterpillar track/chain track, the pressing of the auxiliary wheel AW1 (pressing downward, against a limiter R) and the tensioning of the track when a track is used is performed with the same actuator HA1.

When a track is used, the slide support structure GS1 enables a compensation movement for the auxiliary wheel AW1, which is needed because the distance of the axial line of the auxiliary wheel AW1 and its wheel hub WB1 from the axial line of the actual wheels W21, W22 of the work machine becomes shorter or longer depending on whether the support arm SA1 supporting the auxiliary wheel AW1 and its wheel hub WB1 rotates upward or downward due to the ground contact aimed at the auxiliary wheel. This matters because the location of the auxiliary wheel affects the contact of the auxiliary wheel onto the inner surface of the track, because the track TR1 forms a closed loop over the actual wheel W21 and the auxiliary wheel AW1. The wheel hub WB1 of the auxiliary wheel AW1, and thus also the axial line of the auxiliary wheel, is at a different place, so outer, that is, closer to the rear edge of the work machine than the axial line of the actual wheels W21, W22, this is why a rotational motion of the support arm SA1 in the vertical plane causes the distance between the axial lines becoming shorter or longer, depending on whether the support arm SA1 moves up or down.

In an embodiment, the bearing structure B1 making the vertical rotation of the support arm SA1 possible is a planar vertical structure which comprises a chamber piece B10 and in it a circularly symmetric chamber B11 for a circularly symmetric base part SA1B comprised by the support arm SA1, and in addition the planar vertical structure comprises a support plate structure B12 to cover the chamber B11.

Furthermore related to the bearing structure B1, the circularly symmetric chamber B11 comprised by the bearing structure B1 in the chamber piece B10 is in the transverse direction at least as deep as the circularly symmetric base part SA1B of the support arm SA1. The support plate structure to cover the chamber comprises a support plate B12 on the outermost vertical side of the chamber piece B10, which in Figures 3 to 5 is the left side of the chamber piece B10, because it faces the outer edge of the work machine.

Referring to Figures 3 to 5, the bearing structure comprises a replaceable, so detachably fastened, plane surface piece B13 between the base part SA1B of the support arm SA1 and the frame FR2 of the work machine. This replaceable plane surface B13 between the base part SA1B of the support arm and the frame FR2 of the machine may be an integral part of the chamber piece B10, or a separate plane surface piece B13 may also be considered a part of the support plate structure, that is, it may be seen as a pair for the support plate B12, in particular if the chamber B11 in the chamber piece B10 passes through the chamber piece B10 in the transverse direction.

Figure 5, in particular, illustrates that the bearing structure comprises fastening means B20 by means of which the chamber piece B10 may be detachably fastened to the body FR2 of the work machine 1. The fastening means B20 may be bolts, in which case both the support plate B12, chamber piece B10 and plane surface piece B13 (a second support plate) comprise openings for the bolts B20, and the frame FR2 has a threaded chamber for the bolts B20, or the frame has openings for the bolts and on the other side of the frame wall there are nuts or similar counterparts. The replaceable plane surface piece B13 is fastened by the same fastening means B20 as the chamber piece B10 and support plate B12.

Figure 5, in particular, illustrates that the perimeter of the chamber B11 of the chamber piece B10 comprises an open rotation space defined by opening edges E1, E2 for the rotational movement of the support arm SA1. The opening edges E1, E2 restrict the support arm SA1 from turning too much, in other works, rotation in the vertical plane.

The chamber piece B10 and the chamber and the base part SA1B of the support arm SA1 setting in the chamber is one of the embodiments. This being the case, presented in a more universally applicable manner, it may be noted that the bearing structure B1 enabling the vertical rotation of the support arm SA1 is a planar vertical structure which comprises a chamber piece B10, B11 for a circularly symmetric base part SA1B comprised by the support arm SA1, and in addition the planar vertical structure comprises a support plate structure B12 which is arranged to cover the support part B10, B11 and the base part SA1B of the support arm SA1.

Thus, the bearing structure B1 may be as shown in the drawing and in the above, that is, the base part SA1B of the rotating support arm is in the chamber of the chamber piece B10, that is, the part B10 supporting the support arm SA1 is around the base part SA1B of the support arm, but the structure may also be reversed in that the base part of the support arm would be around a support part fastened to the frame FR2, in this case the base part of the support arm would have an opening /chamber for the support part. This embodiment, too, would have the corresponding additional features as the version in the drawings, that is, among other things, the support part fastened to the frame FR2 would be detachable/replaceable and, in addition, a detachable/replaceable plane surface piece (such as B13).

In an embodiment, in accordance with Figure 3 to 5, in particular, the support arm SA1 comprises at the outer end of the support arm SA1 a limiter R to restrict the movement of the slide support GS1 and consequently also the movement of the wheel hub WB1 of the auxiliary wheel AW1 and the auxiliary wheel AW1. When a work machine without tracks is used, the hydraulic actuator HA1, so the same actuator HA1 that is arranged to maintain the tension of the track or chain track, is arranged to push the wheel hub WB1 of the auxiliary wheel AW1 to rest against the limiter R (pressing is carried out, so the pressing down of the auxiliary wheel), whereby the location of the slide support GS1, wheel hub WB1 of the auxiliary wheel AW1, and auxiliary wheel AW1 is locked.
The slide support structure GS1 comprises a counterpart N1, N2 for the limiter R, the counterpart N1, N2 may be a recess in the slide support structure such a recess N in the plate parts GS11, GS12 of the slide support structure. Higher in the support arm SA1 there is also a second limiter, and there is also a counterpart for it in the plate parts GS11, GS12, such as a recess, to stop a reverse or inward movement of the slide support structure GS1 along the support arm SA1.

The work machine additionally has a second portion of the stabilizing arrangement, that is, a stabilizing arrangement 200. Its structures are of the similar type as those described in the above for the stabilizing arrangement 100. As its main parts, the second stabilizing arrangement 200 comprises a rotating support arm SA2 bearing-mounted to the frame FR2, at the outer end of the support arm SA2 a wheel hub WB2 for an auxiliary wheel AW2, in addition it has the auxiliary wheel AW2 itself and a hydraulic actuator HA2. Correspondingly, the second stabilizing arrangement 200 comprises a slide support structure GS200 for the wheel hub WB2. A similar bearing structure is in place for the support arm SA2 as the one described in the above for the support arm SA1 with reference to the bearing structure B1. The limiter for the slide support structure GS200 is denoted with the marking R2. The work machine has a dedicated arrangement 100 for both sides, correspondingly 200, to stabilize the work machine. On both sides of the work machine, the arrangement is such that the auxiliary wheel AW1, correspondingly AW2, is on the same longitudinal line as the actual wheel W21, correspondingly W22, of the work machine. The track TR1, correspondingly TR2, goes around the actual wheel W21, correspondingly W22, and the auxiliary wheel AW1, correspondingly AW2.

The support arms are located off the longitudinal centre line of the work machine, that is, more outward, and the distance of the support arms SA1, SA2 widens towards the outer ends of the supports arms SA1, SA2, this makes it easier to have the wheel hubs WB1, WB2 of the auxiliary wheels AW1, AW2 on the same line with the actual wheels W21, W22, and the location of the support arms does not encumber the moving of the work machine on uneven terrain.

The invention and its embodiments are not restricted to the above-described examples but may vary within the scope of the claims.

## Claims

1. An arrangement for stabilizing a work machine, such as a forest work machine or another work machine, which comprises axled actual wheels, the arrangement comprising a bearing structure (B1) and a support arm (SA1), adapted vertically rotatably by means of the bearing structure to a frame (FR2) of the work machine and on the side of the outer end of the support arm a wheel hub (WB1), supported by the support arm, for an auxiliary wheel, and the auxiliary wheel (AW1), and that the arrangement further comprises a hydraulic actuator (HA1) to change the position of the wheel hub (WB1) and consequently also the auxiliary wheel (AW1),
**characterized in that** the wheel hub (WB1) is supported by the support arm by means of a slide support structure (GS1) provided in connection with the wheel hub (WB1), to enable the auxiliary wheel (AW1) to move, supported by the support arm (SA1), in the direction of the support arm (SA1), and wherein the bearing structure (B1) enabling the vertical rotation of the support arm (SA1) is a planar vertical structure which comprises a chamber piece (P10) and in it a circularly symmetric chamber (B11) for a circularly symmetric base part (SA1B) comprised by the support arm (SA1), and in addition the planar vertical structure comprises a support plate structure (B12) to cover the chamber (B11).

2. An arrangement as claimed in claim 1, **characterized in that** when the arrangement is in a work machine that has a track (TR1) going around an actual wheel (W21) and the auxiliary wheel (AW1), the hydraulic actuator (HA1) is connected to move the auxiliary wheel as enabled by the slide support structure (GS1) and supported by the support arm (SA1) in order to maintain the tension of the track (TR1).

3. An arrangement as claimed in claim 1 or 2, **characterized in that** the slide support structure (GS1) of the wheel hub (WB1) of the auxiliary wheel comprises vertical plate parts (GS11, GS12) facing each other, which are detachably fastened to each other by second fastening means (GSB, GSN), and **in that** the plate parts (GS11, GS12) define a space (GS13) between them for the support arm (SA1).

4. An arrangement as claimed in claim 1, **characterized in that** the circularly symmetric chamber (B11) comprised by the chamber piece (B11) in the chamber piece (P10) is in the transverse direction at least as deep as the transverse width of the circularly symmetric base part (SA1B) of the support arm (SA1), and **in that** the support plate structure to cover the chamber comprises a support plate (B12) on the outer vertical side of the chamber piece.

5. An arrangement as claimed in claim 1 or 4, **characterized in that** the bearing structure (B1) comprises fastening means (B20) with which the chamber piece (P10) may be detachably fastened to the frame (FR2) of the work machine.

6. An arrangement as claimed in claim 1, 4 or 5, **characterized in that** the bearing structure (B1) comprises a replaceable, that it, detachably fastened, plane surface piece (B13) between the base part (SA1B) of the support arm (SA1) and the frame of the work machine.

7. An arrangement as claimed in any one of the preceding claims 1, 5 to 6, **characterized in that** the perimeter of the chamber (B11) of the chamber piece (P10) comprises an open rotation space defined by opening edges (E1, E2) for the rotational movement of the support arm (SA1).

8. An arrangement as claimed in claim 1, **characterized in that** the support arm (SA1) comprises at the outer end of the support arm a limiter (R) to restrict the movement of the slide support (GS1), wheel hub (WB1) of the auxiliary wheel, and the auxiliary wheel (AW1).

9. An arrangement as claimed in claim 8, **characterized in that** when using a work machine without tracks (TR1), the hydraulic actuator (HA1) is arranged to push the wheel hub of the auxiliary wheel to rest against the limiter (R).

10. A work machine such as a forest machine or another work machine comprising axled actual wheels (W11,W12, W21, W22) and tracks (TR1, TR2), **characterized in that** the work machine comprises an arrangement (100, 200) as claimed in any one of claims 1 to 9 for stabilizing the work machine.

11. A work machine as claimed in claim 10, **characterized in that** the work machine has a dedicated arrangement (100, 200) for both sides to stabilize the work machine, and **in that** on both sides of the work machine the arrangement is such that the auxiliary wheel (AW1; AW2) comprised by the arrangement is on the same longitudinal line as the actual wheel (W21; W22) of the work machine as the track (TR1, TR2) goes around both the actual wheel (W21; W22) and the auxiliary wheel (AW1; AW2).

## Patentansprüche

1. Anordnung zum Stabilisieren einer Arbeitsmaschine, wie etwa einer Forstarbeitsmaschine oder einer anderen Arbeitsmaschine, die eigentliche Räder an Achsen umfasst, wobei die Anordnung eine Lagerstruktur (B1) und einen Stützarm (SA1), der mittels der Lagerstruktur vertikal drehbar an einen Rahmen (FR2) der Arbeitsmaschine angepasst ist, und an der Seite des äußeren Endes des Stützarms eine Radnabe (WB1), die vom Stützarm gestützt wird, für ein Hilfsrad und das Hilfsrad (AW1) umfasst, und dass die Anordnung ferner einen hydraulischen Aktuator (HA1) zum Ändern der Position der Radnabe (WB1) und somit auch des Hilfsrads (AW1) umfasst,
**dadurch gekennzeichnet, dass** die Radnabe (WB1) vom Stützarm mittels einer Gleitstützstruktur (GS1), die in Verbindung mit der Radnabe (WB1) bereitgestellt ist, gestützt wird, um es dem Hilfsrad (AW1) zu ermöglichen, sich gestützt durch den Stützarm (SA1) in die Richtung des Stützarms (SA1) zu bewegen, und wobei die Lagerstruktur (B1), die die vertikale Drehung des Stützarms (SA1) ermöglicht, eine planare vertikale Struktur ist, die ein Kammerstück (B10) und darin eine kreissymmetrische Kammer (B11) für ein kreissymmetrisches Basisteil (SA1B), das am Stützarm (SA1) umfasst ist, umfasst, und zudem die planare vertikale Struktur eine Stützplattenstruktur (B12) zum Abdecken der Kammer (B11) umfasst.

2. Anordnung nach Anspruch 1, **dadurch gekennzeichnet, dass**, wenn sich die Anordnung in einer Arbeitsmaschine befindet, die eine Gleiskette (TR1) aufweist, die um ein eigentliches Rad (W21) und das Hilfsrad (AW1) läuft, der hydraulische Aktuator (HA1) verbunden ist, um das Hilfsrad, wie von der Gleitstützstruktur (GS1) und vom Stützarm (SA1) gestützt, zu bewegen, um die Spannung der Gleiskette (TR1) aufrechtzuerhalten.

3. Anordnung nach Anspruch 1 oder 2, **dadurch gekennzeichnet, dass** die Gleitstützstruktur (GS1) der Radnabe (WB1) des Hilfsrads vertikale Plattenteile (GS11, GS12) umfasst, die einander zugewandt und mit zweiten Befestigungsmitteln (GSB, GSN) lösbar aneinander befestigt sind, und dadurch, dass die Plattenteile (GS11, GS12) zwischen sich einen Raum (GS13) für den Stützarm (SA1) definieren.

4. Anordnung nach Anspruch 1, **dadurch gekennzeichnet, dass** die kreissymmetrische Kammer (B11), die vom Kammerstück (B10) im Kammerstück (B10) umfasst ist, in der Querrichtung mindestens so tief ist wie die Querbreite des kreissymmetrischen Basisteils (SA1B) des Stützarms (SA1), und dadurch, dass die Stützplattenstruktur zum Abdecken der Kammer auf der vertikalen Außenseite des Kammerstücks eine Stützplatte (B12) umfasst.

5. Anordnung nach Anspruch 1 oder 4, **dadurch gekennzeichnet, dass** die Lagerstruktur (B1) Befestigungsmittel (B20) umfasst, mit denen das Kammerstück (B10) lösbar am Rahmen (FR2) der Arbeitsmaschine befestigt werden kann.

6. Anordnung nach Anspruch 1, 4 oder 5, **dadurch gekennzeichnet, dass** die Lagerstruktur (B1) zwischen dem Basisteil (SA1B) des Stützarms (SA1) und dem Rahmen der Arbeitsmaschine ein austauschbares, das heißt lösbar befestigtes ebenes Flächenstück (B13) umfasst.

7. Anordnung nach einem der vorhergehenden Ansprüche 1, 5 bis 6, **dadurch gekennzeichnet, dass** der Umfang der Kammer (B11) des Kammerstücks (B10) für die Drehbewegung des Stützarms (SA1) einen offenen Drehraum umfasst, der durch Öffnungskanten (E1, E2) definiert wird.

8. Anordnung nach Anspruch 1, **dadurch gekennzeichnet, dass** der Stützarm (SA1) am äußeren Ende des Stützarms zum Begrenzen der Bewegung der Gleitstütze (GS1), der Radnabe (WB1) des Hilfsrads und des Hilfsrads (AW1) einen Begrenzer (R) umfasst.

9. Anordnung nach Anspruch 8, **dadurch gekennzeichnet, dass**, wenn eine Arbeitsmaschine ohne Gleisketten (TR1) verwendet wird, der hydraulische Aktuator (HA1) angeordnet ist, die Radnabe des Hilfsrads derart zu drücken, dass sie am Begrenzer (R) anliegt.

10. Arbeitsmaschine wie etwa eine Forstmaschine oder eine andere Arbeitsmaschine, die eigentliche Räder an Achsen (W11, W12, W21, W22) und Gleisketten (TR1, TR2) umfasst, **dadurch gekennzeichnet, dass** die Arbeitsmaschine eine Anordnung (100, 200) nach einem der Ansprüche 1 bis 9 zum Stabilisieren der Arbeitsmaschine umfasst.

11. Arbeitsmaschine nach Anspruch 10, **dadurch gekennzeichnet, dass** die Arbeitsmaschine zum Stabilisieren der Arbeitsmaschine eine dedizierte Anordnung (100, 200) für beide Seiten aufweist, und dadurch, dass die Anordnung auf beiden Seiten der Arbeitsmaschine derart ist, dass sich das Hilfsrad (AW1; AW2), das von der Anordnung umfasst ist, auf derselben Längslinie des eigentlichen Rads (W21; W22) der Arbeitsmaschine befindet, wenn die Gleiskette (TR1, TR2) sowohl um das eigentliche Rad (W21; W22) als auch um das Hilfsrad (AW1; AW2) läuft.

## Revendications

1. Agencement pour stabiliser une machine de travail, telle qu'une machine de travail forestière ou une autre machine de travail, qui comprend de véritables roues à essieu, l'agencement comprenant une structure de palier (B1) et un bras de support (SA1), adapté verticalement en rotation au moyen de la structure de palier, sur un châssis (FR2) de la machine de travail, et du côté de l'extrémité externe du bras de support, un moyeu de roue (WB1), supporté par le bras de support, pour une roue auxiliaire, et la roue auxiliaire (AW1) et en ce que l'agencement comprend en outre un actionneur hydraulique (HA1) pour modifier la position du moyeu de roue (WB1) et par conséquent également de la roue auxiliaire (AW1),
**caractérisé en ce que** le moyeu de roue (WB1) est supporté par le bras de support au moyen d'une structure de support de coulissement (GS1) prévue par rapport au moyeu de roue (WB1), pour permettre à la roue auxiliaire (AW1) de se déplacer, supportée par le bras de support (SA1) dans la direction du bras de support (SA1), et dans lequel la structure de palier (B1) permettant la rotation verticale du bras de support (SA1) est une structure verticale planaire qui comprend une pièce de chambre (B10) et dans cette dernière, une chambre circulairement symétrique (B11) pour une partie de base circulairement symétrique (SA1B) composée par le bras de support (SA1), et de plus la structure verticale planaire comprend une structure de plaque de support (B12) pour recouvrir la chambre (B11).

2. Agencement selon la revendication 1, **caractérisé en ce que** lorsque l'agencement est dans une machine de travail qui a une chenille (TR1) passant autour d'une véritable roue (W21) et de la roue auxiliaire (AW1), l'actionneur hydraulique (HA1) est raccordé pour déplacer la roue auxiliaire, telle qu'autorisée par la structure de support de coulissement (GS1) et supportée par le bras de support (SA1) afin de maintenir la tension de la chenille (TR1).

3. Agencement selon la revendication 1 ou 2, **caractérisé en ce que** la structure de support de coulissement (GS1) du moyeu de roue (WB1) de la roue auxiliaire comprend des parties de plaque verticales (GS11, GS12) se faisant face, qui sont fixées de manière détachable entre elles par un second moyen de fixation (GSB, GSN) et **en ce que** les parties de plaque (GS11, GS12) définissent un espace (GS13) entre elles pour le bras de support (SA1).

4. Agencement selon la revendication 1, **caractérisé en ce que** la chambre circulairement symétrique (B11) composée par la pièce de chambre (B10) dans la pièce de chambre (B10) est dans la direction transversale au moins aussi profonde que la largeur transversale de la partie de base circulairement symétrique (SA1B) du bras de support (SA1) et **en ce que** la structure de plaque de support pour recouvrir la chambre comprend une plaque de support (B12) du côté vertical externe de la pièce de chambre.

5. Agencement selon la revendication 1 ou 4, **caractérisé en ce que** la structure de palier (B1) comprend un moyen de fixation (B20) avec lequel la pièce de chambre (B10) peut être fixée, de manière détachable, au châssis (FR2) de la machine de travail.

6. Agencement selon la revendication 1, 4 ou 5, **caractérisé en ce que** la structure de palier (B1) comprend une pièce de surface plane (B13) remplaçable, c'est-à-dire fixée de manière détachable, entre la partie de base (SA1B) du bras de support (SA1) et le châssis de la machine de travail.

7. Agencement selon l'une quelconque des revendications 1, 5 à 6, **caractérisé en ce que** le périmètre de la chambre (B11) de la pièce de chambre (B10) comprend un espace de rotation ouvert défini par des bords d'ouverture (E1, E2) pour le mouvement de rotation du bras de support (SA1).

8. Agencement selon la revendication 1, **caractérisé en ce que** le bras de support (SA1) comprend, au niveau de l'extrémité externe du bras de support, un limiteur (R) pour limiter le mouvement du support de coulissement (GS1), du moyeu de roue (WB1) de la roue auxiliaire, et de la roue auxiliaire (AW1).

9. Agencement selon la revendication 8, **caractérisé en ce que** lorsque l'on utilise une machine de travail sans chenilles (TR1), l'actionneur hydraulique (HA1) est agencé pour pousser le moyeu de roue de la roue auxiliaire pour qu'il s'appuie contre le limiteur (R).

10. Machine de travail telle qu'une machine forestière ou une autre machine de travail comprenant de véritables roues à essieu (W11, W12, W21, W22) et des chenilles (TR1, TR2), **caractérisée en ce que** la machine de travail comprend un agencement (100, 200) selon l'une quelconque des revendications 1 à 9 pour stabiliser la machine de travail.

11. Machine de travail selon la revendication 10, **caractérisée en ce que** la machine de travail a un agencement dédié (100, 200) pour les deux côtés afin de stabiliser la machine de travail, et **en ce que** des deux côtés de la machine de travail, l'agencement est tel que la roue auxiliaire (AW1 ; AW2) composée par l'agencement, est sur la même ligne longitudinale que la véritable roue (W21 ; W22) de la machine de travail lorsque la chenille (TR1, TR2) passe à la fois autour de la véritable roue (W21 ; W22) et de la roue auxiliaire (AW1 ; AW2).
